(19) Europäisches Patentamt
European Patent Office
Office européen des brevets

(11) **EP 2 276 660 B1**

(12) **FASCICULE DE BREVET EUROPEEN**

(45) Date de publication et mention de la délivrance du brevet:
**08.08.2012 Bulletin 2012/32**

(21) Numéro de dépôt: **09726057.4**

(22) Date de dépôt: **27.03.2009**

(51) Int Cl.:
**B62D 57/024** *(2006.01)*     **A63B 27/00** *(2006.01)*

(86) Numéro de dépôt international:
**PCT/EP2009/053663**

(87) Numéro de publication internationale:
**WO 2009/118409 (01.10.2009 Gazette 2009/40)**

(54) **ROBOT GRIMPEUR DE POTEAU**

ROBOTER ZUM BESTEIGEN VON MASTEN

ROBOT FOR CLIMBING POSTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.03.2008 FR 0801713**

(43) Date de publication de la demande:
**26.01.2011 Bulletin 2011/04**

(73) Titulaires:
  • **THALES**
    **92200 Neuilly-sur-Seine (FR)**
  • **Institut Francais De Mecanique Avancee**
    **63175 Aubiere Cedex (FR)**

(72) Inventeurs:
  • **FAUROUX, Jean-Christophe**
    **F-63230 Mazayes (FR)**
  • **MORILLON, Joël**
    **F-78114 Magny Les Hameaux (FR)**
  • **LE GUSQUET, Frédéric**
    **F-77990 Elancourt (FR)**
  • **GUIET, Frédéric**
    **26000 VALENCE (FR)**
  • **VIENNE, Maxime**
    **F-63100 Clermont-Ferrand (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
  WO-A-92/04269     WO-A-2008/076193
  CA-A1- 2 192 757     US-A1- 2003 188 416

**Description**

L'invention s'inscrit dans le domaine de la sécurité des biens et des personnes, et contribue plus particulièrement à la « gestion de crises » civiles (catastrophe naturelle ; contamination chimique, biologique ou radiologique ; émeutes) et/ou militaires (actions de maintien de la paix, sécurisation de périmètre, contrôle de zone, ...}. Elle concerne plutôt les milieux structurés (urbains ou ruraux), mais s'applique éventuellement aux espaces naturels.

L'efficacité de la gestion de tels contextes repose essentiellement sur une estimation à la fois rapide, fiable et permanente de la situation. Il s'agit pour cela de recueillir l'ensemble des données nécessaires pour la caractériser en termes de criticité (quel est le niveau de gravité ?), d'espace (quelle est l'étendue de la crise ?) et de temps (comment la situation évolue-t-elle ?). Dans une gestion de crise centralisée, qui est le cas le plus courant, l'ensemble de ces données doit ensuite être acheminé au poste central coordonnant les actions sur le terrain.

La nature des données à acquérir pour bâtir et maintenir à jour une bonne représentation de la situation, dépend de la nature de la crise considérée : l'observation visuelle, directe quand elle est possible sans risque ou bien par l'intermédiaire de caméras déportées, constitue clairement une source d'information privilégiée. Les moyens utilisés doivent cependant être compatibles avec le contexte (perception de jour et/ou de nuit, nécessité de points de vue multiples, présence de contamination, discrétion, etc.) et ne suffisent pas forcément à appréhender toutes les dimensions de la crise.

Ainsi, au-delà de la seule vision directe ou déportée, des capteurs dédiés sont souvent requis pour enrichir la connaissance de la situation ; on peut notamment considérer des capteurs acoustiques (microphones), des capteurs de contamination nucléaire, chimique, biologique ou radiologique, des capteurs de température, de détection de mouvements voire des modules de localisation GPS.

Il existe donc un besoin fort d'adaptabilité et de modularité dans les équipements de perception à utiliser, afin de recueillir l'information la plus exhaustive possible.

La capacité à recueillir simultanément des données sur toute la zone concernée, au travers d'un maillage plus ou moins dense de capteurs complémentaires, constitue un autre facteur de succès de la gestion de crise. Il faut alors disposer des moyens permettant un positionnement adapté et une mise en oeuvre rapide de ces équipements multiples, qui permettront une permanence (endurance) de fonctionnement maximale.

La qualité et la richesse des données délivrées par la majorité des capteurs considérés dépendent fortement de leur placement sur le terrain. Un positionnement en hauteur permet d'étendre la portée de perception, en particulier pour les capteurs d'observation (caméras) qui constituent l'une des sources d'information principales, et permet de s'affranchir des obstacles propres au milieu urbanisé, cadre d'application préférentielle de la présente invention.

Enfin, la collecte d'informations réparties sur la zone de crise doit s'accompagner des moyens de communication adaptés permettant d'acheminer les données vers le poste de gestion centralisée. Les infrastructures existantes (réseaux téléphoniques, réseau internet, ...) peuvent répondre à une partie du besoin, par exemple entre un « noeud de communication du réseau de capteurs » et le poste de gestion centralisée ; par contre, il reste nécessaire de mettre en place les transmissions individuelles (radio) entre les capteurs et ce « noeud de communication », en cherchant à s'affranchir au mieux des difficultés de transmission radio propres au milieu urbain (occultations et masquages, réflexions parasites, ...). Une capacité de positionnement rapide d'antennes et/ou de relais de communication sur des points hauts du milieu urbain est nécessaire à la crédibilité d'un dispositif de recueil d'informations réparti, avec mise en oeuvre accélérée. Cette capacité peut être combinée à celle permettant déjà un déploiement en hauteur des différents capteurs.

Une première solution consiste à installer manuellement les capteurs considérés. Mais une mise en place manuelle des capteurs ne permet pas de bénéficier facilement d'un positionnement en hauteur. L'usage d'échelles, de chariots élévateurs ou de tout autre moyen équivalent nécessite une logistique importante ; les moyens nécessaires ne sont pas toujours immédiatement disponibles et leur mise en oeuvre nécessite toujours des délais importants, incompatibles avec la réactivité habituellement recherchée en situation de crise. De plus, la discrétion requise par certaines utilisations (policière, militaire) est également pénalisée lorsque l'on fait appel à des moyens de déploiement lourds.

Certains sites jugés sensibles peuvent être pré-équipés par des moyens à demeure permettant de réaliser leur surveillance permanente. Cette deuxième solution est effectivement d'ores et déjà retenue pour des sites tels que par exemple, des lieux publics propices aux agressions ou aux débordements (surveillance des transports en commun, contrôle de foule dans les stades) ou bien des zones industrielles à risques. Il n'est cependant pas envisageable d'équiper l'ensemble des sites potentiellement concernés par une situation de crise, à la fois pour des raisons économiques et du fait du caractère par définition imprévisible de la crise (par exemple, surveillance de certaines cités sensibles par les forces de police).

Il existe actuellement différents dispositifs électromécaniques capables de se déplacer sur des supports verticaux à 1 degré de liberté (de type échelle ou poteau) ou 2 degrés de liberté (de type paroi).

On connaît des robots capables de se déplacer le long d'un mur au moyen de ventouses (tel que décrit dans le brevet US 005551525), d'électro-aimants (tel que décrit dans le brevet US 003811320) et/ou de pointes plantées.

Le brevet US 5 213 172 décrit un système capable de transporter des outils verticalement le long de structures de type « pylône à haute tension » à structure en treillis. Le mécanisme préhenseur proposé est cependant spécifiquement dédié à ce type de support et est consommateur d'énergie. Par son principe et son fonctionnement alternatif, ce système implique une grande complexité et réclame un nombre important de capteurs pour garantir le positionnement judicieux des préhenseurs entre les noeuds de la structure en treillis.

Le « robot grimpeur » présenté dans le brevet US 005542496 est initialement destiné à escalader les tuyaux et poteaux métalliques à des fins de sablage et/ou de peinture. La prise en compte de la variation du diamètre du poteau conique à escalader est réalisée avec un dispositif presseur pneumatique, lourd, coûteux et à forte consommation énergétique. Celui-ci réclame par ailleurs une boucle de régulation de pression complexe afin de garantir le non glissement du robot. Par ailleurs, ce dispositif enserre le poteau sur la totalité de sa circonférence, ce qui ne semble pas compatible avec la présence d'éventuels obstacles.

Le brevet US 2003/0188416 décrit un robot grimpeur selon le préambule de la revendication 1, qui comporte un mécanisme de serrage à ressort pour maintenir le robot sur le poteau.

Plusieurs robots d'élagage d'arbres exploitent le principe d'une couronne centrée sur le tronc par plusieurs galets périphériques maintenus plaqués par une forte pression ; ils sont décrits dans les brevets US2581479, US2477922, US2482392. Tous exigent d'enserrer complètement le tronc et comportent des mécanismes de serrage régulés, complexes et encombrants.

Il existe aussi des dispositifs exploitant un mécanisme d'arc-boutement statique permettant de fixer une plate-forme en porte-à-faux sur un poteau ou dans un arbre ; un exemple est présenté dans le brevet US 3460649. La plupart de ces systèmes permettent également l'ascension de l'arbre par des mouvements saccadés, violents, consommateurs d'énergie et entièrement manuels ; on peut citer à titre d'exemples, les systèmes des brevets US 4331216, US 3960240, US 3955645.

En conséquence, il demeure à ce jour un besoin pour un système capable de grimper le long d'un poteau (tel qu'un lampadaire, un tronc d'arbre, une gouttière, etc.), équipé de moyens pour assurer une mission de surveillance par exemple, notamment en milieu urbain, et donnant simultanément satisfaction à l'ensemble des exigences précitées, à savoir encombrement réduit et légèreté, endurance de fonctionnement, faible consommation d'énergie, installation facile, rapide et discrète, autonomie et rapidité de déplacement le long du poteau, capacité d'orientation autour du poteau, aptitude à franchir d'éventuels obstacles tangentiels au poteau.

Le robot grimpeur selon l'invention est un robot équipé de moyens de déplacement, de différents capteurs, d'une source d'énergie autonome et d'un émetteur récepteur pour transmettre les informations captées à un poste central (PC) de surveillance et pour recevoir du PC les consignes de commande des capteurs et des moyens de déplacement

Par robot grimpeur, on entend un robot capable de grimper le long d'un poteau et d'en redescendre.

La consommation d'énergie est fortement réduite par rapport aux systèmes de l'art antérieur car le maintien en position sur le poteau est assuré sans consommation d'énergie par le principe d'arc-boutement. Seule l'ascension (ou la descente) du robot est consommatrice d'énergie.

Plus précisément l'invention a pour objet un robot grimpeur mobile le long d'un poteau présentant un axe vertical Oz, qui comprend un bâti équipé de moyens motorisés de déplacement le long du poteau et d'un module de contrôle-commande de ces moyens de déplacement. Il est caractérisé en ce que les moyens motorisés de déplacement comportent des moyens d'arc-boutement dont le centre de gravité G est éloigné de l'axe Oz du poteau, et qui comprennent au moins deux appuis roulants destinés à être en contact avec le poteau, dont au moins un appui roulant motorisé désigné appui propulseur frottant avec le poteau, l'éloignement de G, le coefficient de frottement de l'appui propulseur et l'inclinaison du robot par rapport à l'axe Oz étant liés entre eux de manière à assurer le maintien du robot en position fixe sans consommation d'énergie.

On obtient ainsi un dispositif électro-mécanique permettant d'améliorer l'efficacité de la gestion des crises en milieu structuré. Il a comme avantages :

une capacité d'emport de charges utiles modulaires et facilement interchangeables, de natures diverses (caméras, capteurs NRBC acronyme de l'expression Nucléaire Radiologique Biologique Chimique, moyens de transmission et relayage radio, antennes, modules de localisation GPS),

une capacité à positionner rapidement les charges utiles emportées, sur différents supports verticaux du milieu urbain afin d'étendre leurs performances via une exploitation des « positions surélevées »,

une masse et un gabarit réduits pour un déploiement rapide par un utilisateur unique, sans logistique additionnelle et sans préparation lourde (y compris en termes de déclarations ou d'autorisations),

une couverture spatiale étendue et simultanée du recueil de données (par exploitation de plusieurs robots grimpeurs, pouvant être équipés de capteurs complémentaires),

une permanence temporelle du recueil de données : une fois positionné, le robot grimpeur ne consomme plus d'énergie qui devient alors entièrement disponible pour la charge utile ; le positionnement sur des « points hauts extérieurs » associé à la faible consommation des capteurs considérés, permet d'envisager des capteurs solaires pour alimenter l'unité centrale, sur une durée indéfinie.

Aucune des solutions actuelles concurrentes n'offre simultanément l'ensemble de ces capacités.

De préférence, pour des raisons de simplicité de la transmission mécanique, l' (ou les) appui(s) roulant(s) motorisé(s) est (sont) l' (les) appui(s) roulant(s) le(s) plus proche(s) du centre de gravité G.

Afin d'éviter tout déséquilibre des forces de contact du poteau sur le robot, les appuis roulants sont par exemple situés dans un plan GOz, plan de symétrie du robot (avec G = centre de gravité du robot et Oz = axe du poteau) et/ou symétriquement répartis par rapport à ce plan de symétrie.

Le robot s'agrippe au poteau en utilisant le phénomène d'arc-boutement, qui est étroitement lié à la position relative du centre de gravité G de l'ensemble {robot + charge utile} par rapport aux points d'appuis et dépend bien sûr également du coefficient de frottement des contacts aux appuis et de l'inclinaison du robot par rapport à l'axe Oz. Le phénomène d'arc-boutement qui sera rappelé plus loin survient quand G est suffisamment éloigné de l'axe Oz du poteau.

Selon un mode de réalisation de l'invention, le centre de gravité est situé au niveau d'un ensemble moteur-batteries inclus dans les moyens motorisés ; il peut aussi être situé au niveau de la charge utile du robot.

Les moyens d'arc-boutement comportent avantageusement une tourelle orientable selon un axe sensiblement normal au poteau, sur laquelle est monté un appui propulseur. En changeant l'orientation de la tourelle, il devient possible d'avoir un mouvement d'ascension hélicoïdal, voire d'orienter le robot autour du poteau à altitude constante.

Ils comportent également de préférence, au moins un appui roulant non motorisé aussi désigné appui passif et cet (ces) appui(s) passif(s) est(sont) une (des) liaison(s).

Selon une caractéristique de l'invention, afin de permettre l'ascension de poteaux coniques, les moyens d'arc-boutement comportent pour au moins un appui, un mécanisme de serrage destiné à maintenir tous les appuis serrés sur le poteau.

Ce mécanisme de serrage comprend par exemple deux appuis roulants réglables, mobiles par rapport au bâti et montés sur des bras rotatifs serrés par ressorts. Il est possible de rajouter un mécanisme de couplage rendant les déplacements des deux bras symétriques.

L'appui présente avantageusement un volume apte à s'inscrire entre un plan T tangentiel au poteau et un plan P parallèle à T et passant par l'axe Oz du poteau.

Selon une autre caractéristique de l'invention, les moyens motorisés de déplacement comportent un moteur, un appui propulseur, une tourelle orientable et un crabot relié d'une part au moteur et d'autre part à l'appui propulseur ou à la tourelle orientable. Cette disposition permet d'actionner soit la propulsion du robot, soit l'orientation de la tourelle avec un seul moteur et peut contribuer à alléger le robot. Le crabot peut éventuellement être remplacé par deux mécanismes à roues-libres antagonistes permettant, suivant le sens de rotation du moteur, d'actionner la propulsion du robot ou l'orientation de la tourelle.

Selon une variante de réalisation, ils comportent un appui propulseur, une tourelle orientable, un premier moteur relié à l'appui propulseur, et un deuxième moteur relié à la tourelle orientable. L'utilisation de deux moteurs permet plus de fiabilité et des manoeuvres supplémentaires.

D'autres caractéristiques et avantages de l'invention apparaîtront à la lecture de la description détaillée qui suit, faite à titre d'exemple non limitatif et en référence aux dessins annexés dans lesquels :

la Figure 1 représente schématiquement un exemple de robot grimpeur à deux appuis selon l'invention, en vue de côté, la figure 1 bis reprenant la figure 1 pour illustrer le phénomène d'arc-boutement,
les Figures 2 représentent schématiquement un exemple de robot grimpeur à trois appuis selon l'invention, en vue de côté (Fig. 2a) et de dessus (Fig. 2b),
la Figure 3 représente la schématisation géométrique d'un robot grimpeur à trois appuis selon l'invention, avec ses cotes caractéristiques pour un diamètre de poteau variable entre Dmin et Dmax, en vue de dessus,
les Figures 4 représentent la vue du bloc-transmission dans sa variante à 2 roues libres en perspective, en entier (fig 4a) et en coupe (fig 4b),
la Figure 5 représente la vue du bloc-transmission dans sa variante à crabot en perspective,
les Figures 6 représentent schématiquement un exemple de robot grimpeur selon l'invention à trois appuis, vue de dessus (fig 6a) et vue en perspective (fig 6b).

D'une figure à l'autre, les mêmes éléments sont repérés par les mêmes références.

L'invention concerne un robot grimpeur le long d'un poteau. Par poteau, on entend une structure verticale de type tronconique ou cylindrique. à section sensiblement circulaire ou polygonale, apte à être enserrée par le robot, en partie ou totalement. A titre représentatif de poteaux, on peut citer un poteau électrique ou téléphonique, un lampadaire, une descente d'eau, etc.

La consommation d'énergie est fortement réduite par rapport aux systèmes de l'art antérieur car seule l'ascension du robot est consommatrice d'énergie. Une fois positionné, le robot grimpeur ne consomme plus d'énergie, qui devient alors entièrement disponible pour la charge utile.

Le maintien en position sur le poteau est assuré sans consommation d'énergie par le principe d'arc-boutement, c'est-à-dire par un coincement obtenu lors d'un contact frottant entre le poteau et les points d'appui du robot sur le poteau.

Le coincement s'obtient lorsque la force tangentielle au contact tend à augmenter la force normale, ce qui augmente alors la force tangentielle jusqu'au blocage.

La description est faite en relation avec les figures et la nomenclature suivante.

Nomenclature

1 Bâti
2 Appui motorisé : galet propulseur
3 Tourelle orientable
4 Appui passif à rotule
5 Bras mobile
6 Pivot du bras
7 Levier arrière du bras
8 Renfort de bras mobile
9 Trou de goupille pour réglage de l'ouverture des bras
10 Bielle de commande
11 Chariot coulissant
12 Tube de guidage de chariot
13 Support avant mobile
14 Support arrière fixe
15 Moteur électrique
16 Automate programmable commandable à distance (Bluetooth)
17 Bloc de commande (carte de puissance, batteries, ...)
18 Crabot
19 Réducteur à engrenages pour la propulsion du galet
20 Réducteur à engrenages pour l'orientation de la tourelle
21 Couronne dentée
22 Roues libres
50 Poteau cylindrique ou conique

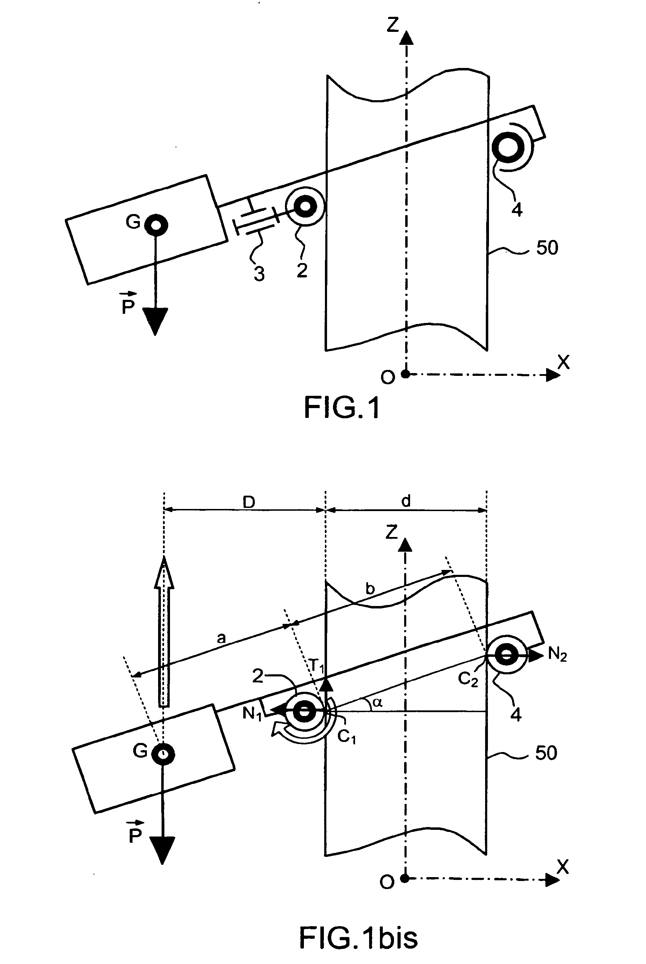

Pour assurer son maintien en position sous l'effet du poids P, le robot est arc-bouté sur deux points d'appuis au minimum comme illustré Figures 1 et 1 bis. Il est alors stable et peut rester accroché au poteau 50 sans consommation d'énergie.

Afin de permettre l'ascension ou la descente du robot tout en gardant une cinématique très simple, les contacts ponctuels sont assurés par des appuis roulants tels que le galet 2 et la rotule 4. On appelle appui roulant un sous-ensemble mécanique permettant l'appui du robot sur le poteau ; il s'agit d'un solide roulant tel qu'un galet ou une bille, en liaison pivot ou rotule avec un autre corps du robot, etc.

Ces appuis roulants sont motorisés afin de permettre l'ascension ou la descente. Le choix le plus pertinent consiste à ne motoriser qu'un appui, le plus proche du corps du robot, c'est-à-dire le galet 2. Il est également possible de motoriser la rotule 4 mais le mécanisme de transmission est plus complexe. La motorisation simultanée des appuis 2 et 4 réclame que les deux appuis avancent à la même vitesse.

On rappelle les notions d'arc-boutement.

On dit qu'il y a arc-boutement sur un solide lorsque le phénomène d'adhérence provoque une impossibilité de mouvement quelle que soit l'intensité des actions mécaniques extérieures.

Le robot selon l'invention est basé sur l'arc-boutement pour son maintien en position. Afin d'assurer la mobilité en ascension, les points de contact C1 et C2 sont assurés par les appuis roulants 2 et 4. La figure 1 bis représente le robot équipé de deux galets. Il est alors possible de calculer la condition d'arc-boutement du robot sur ses appuis.

Seul le galet 2 est motorisé. Le contact C1 peut donc transmettre à la fois un effort normal N1 et un effort tangentiel T1. Le galet 4 est libre. Le contact C2 ne transmet qu'un effort normal N2. Il n'y a aucun effort tangentiel.

Ecrivons la condition de maintien en équilibre statique à l'aide du principe fondamental de la statique :

- Bilan des forces selon x :

$$N1=N2 \text{ (éq 1)}$$

- Bilan des forces selon z :

$$T1 = mg \text{ (éq 2)}$$

- Bilan des moments selon y (direction perpendiculaire au plan de la figure) ramenés au point C1 :

$$amg \cos(\alpha) = b\,N2\,\sin(\alpha) \text{ (éq 3),}$$

a étant la distance entre le contact C1 du galet 2 et le centre de gravité G, b la distance entre les deux contacts C1 et C2 des galets 2 et 4, m la masse du robot, g l'accélération de la pesanteur.
- En introduisant le coefficient de frottement $\mu$, la condition de non-glissement en C1 s'écrit :

$$T1 \leq \mu\,N1 \text{ (éq 4)}$$

(éq 2) et (éq 4) permettent de ré-écrire la condition de non glissement :

$$N1 \geq mg/\mu \text{ (éq 5)}$$

(éq 1) et (éq 3) permettent d'obtenir l'expression de N1 :

$$N1 = amg/[b\,\tan(\alpha)] \text{ (éq 6)}$$

(éq 5) et (éq 6) permettent enfin d'obtenir la condition de non-glissement, garante de l'arc-boutement c'est-à-dire permettant que le robot soit maintenu sur le poteau sans glisser quelle que soit l'intensité des forces extérieures verticales:

$$a \geq b\,\tan(\alpha)/\mu \text{ avec } \alpha = \text{arc } \cos(d/b) = \text{arc } \cos(D/a) \text{ (éq 7),}$$

d étant le diamètre du poteau, D la distance du centre de gravité G au poteau.

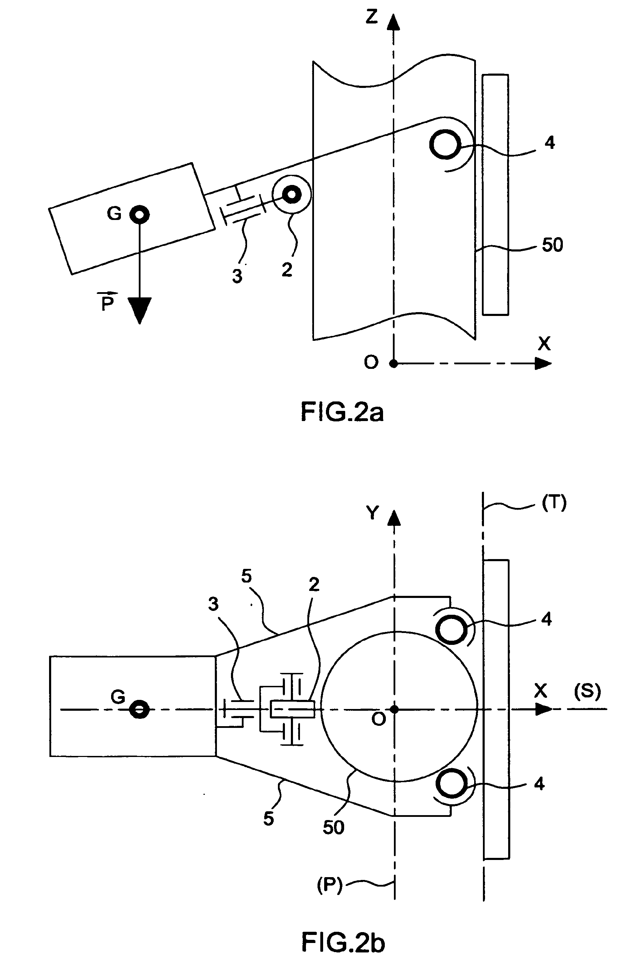

On voit que cette condition impose d'avoir un porte-à-faux a suffisamment long pour que l'arc-boutement survienne. Plus l'adhérence augmente (pour de grandes valeurs de $\mu$) et plus a peut être court. Selon (éq 7), moins le robot est incliné (pour de petites valeurs de $\alpha$) et plus a décroit. En effet, (éq 3) montre que les efforts normaux augmentent lorsque $\alpha$ diminue. Dans le cas d'un robot quasi horizontal, les efforts normaux tendent vers l'infini.
La condition d'arc-boutement (éq 7) dépend uniquement de la géométrie et du coefficient de frottement.
Pour donner au robot une seconde mobilité en rotation autour du poteau, on monte le galet 2 sur une tourelle orientable 3. Cette tourelle 3 est orientable selon un axe sensiblement normal au poteau 50. De plus, on choisit pour l'appui 4 une liaison compatible simultanément avec les mobilités en ascension et en rotation axiale autour de Oz, une liaison sphérique par exemple.
Afin d'améliorer la stabilité du robot sur le poteau 50 et d'éviter un déversement latéral en rotation autour de l'axe Gx, les points de contact du robot sur le poteau doivent être positionnés symétriquement par rapport au plan GOz, G étant le centre de gravité du robot, Oz l'axe du poteau. Ce plan de symétrie du robot est noté S par la suite. Lorsque seul l'appui le plus proche de G est motorisé, on peut envisager différents cas en se plaçant dans la vue de la Figure 2b, en projection selon l'axe Oz :

- 2 appuis à 180°
- 3 appuis à 120° (Figure 2)
- 4 appuis à 90°
- n appuis à 360°/n, (n>1)

Dans la suite on choisit comme exemple non limitatif de robot grimpeur, un robot à trois appuis, qui comprend un galet propulseur 2 et deux liaisons sphériques passives (c'est-à-dire non motorisées) 4. Afin de permettre au robot d'éviter d'éventuels obstacles fixés tangentiellement au poteau, il est important d'utiliser des liaisons 4 très compactes. Par liaison compacte on entend une liaison dont le volume est apte à s'inscrire entre un plan T tangentiel au poteau 50 (ce plan T matérialisant un des plans frontière délimitant l'obstacle) et un plan P parallèle à T et passant par l'axe Oz du poteau ; ces plans T et P sont visibles sur la Figure 2b.

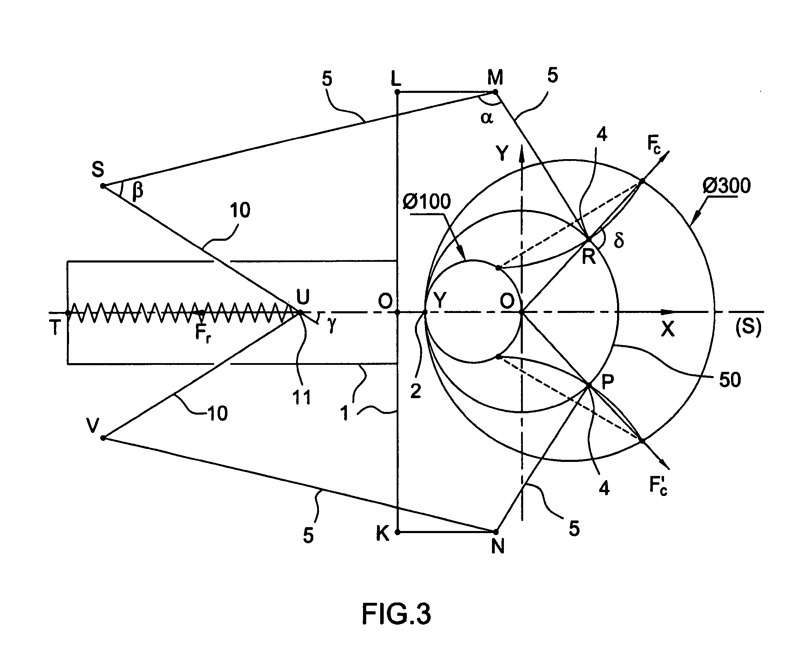

Afin de rendre le robot compatible avec des poteaux coniques, on le dote de deux bras mobiles 5 qui supportent les appuis passifs 4 et permettent ainsi d'enserrer le poteau (Figure 3). Ces bras sont maintenus serrés sur le poteau par le biais d'un mécanisme de serrage actionné par de puissants ressorts dont la force Fr est visible sur la Figure 3.

Le bâti 1 comporte les segments MLOKN ainsi que le support OT pour les ressorts. On donne dans les tableaux suivants des exemples de dimensions de ces segments ainsi que des exemples de plages de diamètres de poteaux.

| Plage de diamètres Dmin-Dmax (mm) | Angle α |
|---|---|
| 100-200 | 95° |
| 150-250 | 110° |
| 200-300 | 125° |

| Dimension | Valeur (mm) |
|---|---|
| KL | 440 |
| LM | 103 |
| US | 240 |
| SM | 420 |
| MR | 177 |

Sur la figure 3 sont représentés trois cercles, le petit correspondant au diamètre Dmin, le grand au diamètre Dmax et l'intermédiaire à un diamètre intermédiaire ; pour une configuration donnée, le robot escalade un poteau dont le diamètre est compris entre Dmin et Dmax. Les points de contact des appuis passifs 4 sont en R et P sur le cercle intermédiaire, celui de l'appui motorisé 2 étant situé en Y. Afin d'équilibrer les efforts de contact du poteau sur le robot, on souhaite répartir les trois points de contact Y, R, P régulièrement à 120° et ceci quel que soit le diamètre du poteau. On propose pour cela un mécanisme simple permettant de déplacer les points R et P par la simple rotation des bras 5 SMR et VNP.

Dans l'exemple de la figure 3, les deux bras 5 comportent 2 segments, SM, MR respectivement VN, NP. Ce mécanisme conserve ainsi les trois points Y, R, P approximativement à 120° quel que soit le diamètre du poteau 50. Les forces de contact en R et P, notées Fc et F'c, font ainsi un angle de pression δ par rapport aux segments MR, respectivement NP. L'angle δ est de préférence voisin de 90° pour le diamètre intermédiaire du poteau, pour assurer une bonne efficacité. Les bras 5 sont poussés par des bielles 10 US et UV déplacées symétriquement grâce à un chariot 11 représenté par le point U coulissant sur l'axe OT. On note γ l'angle de pression de la force Fr appliquée par les ressorts sur les bielles 10 et β l'angle de pression de la force appliquée par les bielles 10 sur les bras 5. De puissants ressorts de traction, accrochés sur le bâti en T, appliquent une force de rappel Fr au point U du chariot, ce qui tend à le rapprocher du point T. L'utilisation de ressorts permet de ne pas faire appel à une énergie extérieure pour le serrage, les efforts internes étant considérables dans le cas de l'arc-boutement. Lorsque les bras 5 SMR et VNP serrent le poteau au maximum, les bielles 10 sont en configuration singulière (S, U et V alignés) et les ressorts qui sont quasi détendus, n'ont pas besoin de fournir de gros efforts pour que le robot serre fortement le poteau en R et P.

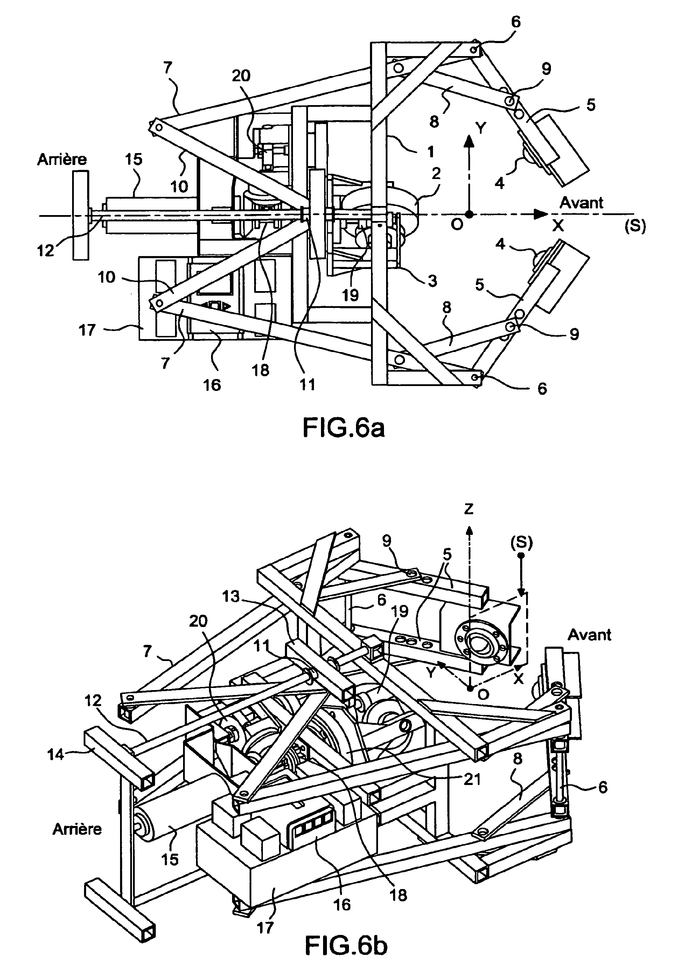

Comme aucun ressort ne peut s'allonger suffisamment tout en appliquant les efforts intenses nécessaires en P et R, on propose trois réglages des bras 5 du robot permettant d'escalader des poteaux dans les gammes de diamètres indiquées dans le tableau ci-dessus. Pour passer d'une configuration à l'autre, on modifie la triangulation des bras c'est-à-dire l'angle α entre SM et MR, respectivement VN et NP, par le biais de goupilles de réglage 9 que l'on voit figure 6. Cet angle α est réglé une fois pour toutes avant l'ascension d'un poteau conique, en fonction de ses diamètres Dmin et Dmax.

Le châssis est par exemple réalisé en tube aluminium soudé très rigide.

On aborde à présent l'aspect motorisation du robot.

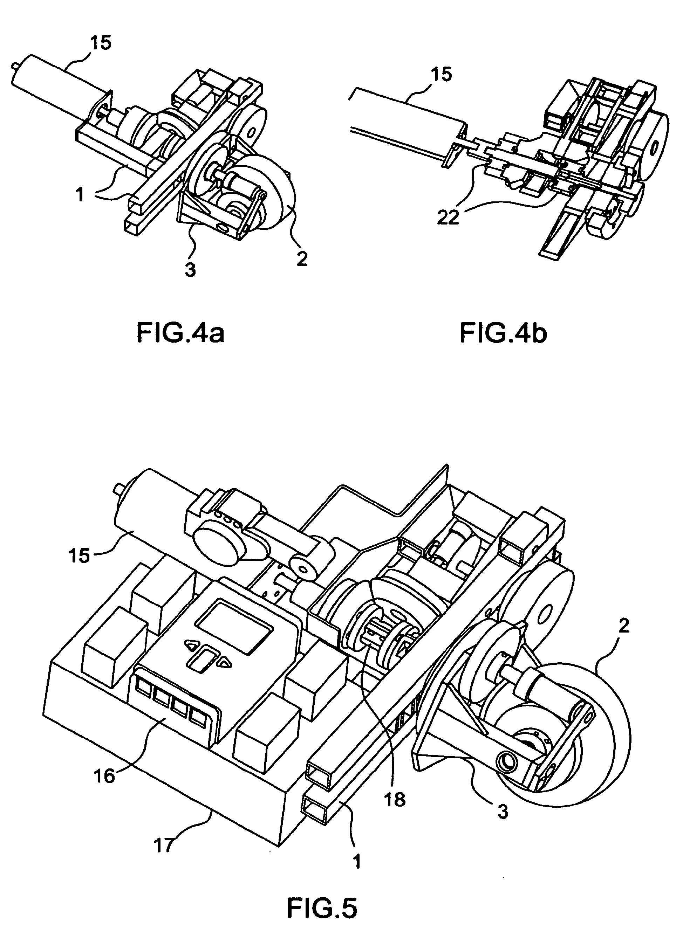

Sur les Figures 4, le robot grimpeur est motorisé par un moteur principal 15 qui, suivant son sens de rotation, entraîne soit l'appui propulseur 2 c'est-à-dire le galet d'ascension, soit la tourelle d'orientation 3 (ces éléments ne sont pas repris figure 4b) : un tel bloc-transmission est montré figures 4. L'utilisation de deux roues libres 22 permet de prélever le mouvement correspondant.

Selon une variante représentée Figure 5, le robot grimpeur est motorisé par un moteur principal 15 suivi d'un système de crabotage actionné par un moteur miniature, non représenté sur la figure. Le crabot 18 remplace les roues libres. Selon la position du crabot, on commute entre un mode « rotation galet » et un mode « orientation tourelle ».

Une seconde variante est envisagée qui permet d'améliorer le rendement et la simplicité mécanique. La motorisation est alors assurée par deux moteurs séparés : un gros moteur pour la rotation du galet 2, un moteur plus réduit pour l'orientation de la tourelle 3.

Le centre de gravité G peut être situé dans l'ensemble moteur-batteries ou dans la charge utile.

On va décrire un exemple de robot grimpeur assemblé, en relation avec les Figures 6.

Le robot assemblé intègre le châssis, le bloc-transmission et un module de commande 17.

Les Figures 6 représentent un robot grimpeur assemblé. Il comporte un bâti rigide 1, par exemple en tubes d'aluminium soudés, qui supporte le galet propulseur 2 monté sur une tourelle orientable 3. Ce galet constitue le point de contact arrière du robot avec le poteau 50 non représenté sur ces figures. Les deux points de contact avant sont assurés par deux appuis passifs, en l'occurrence des rotules 4 non motorisées, chacune de ces rotules étant fixée sur un bras mobile 5. On peut noter sur la Fig. 6b que, dans cette version particulière du robot, chaque bras 5 a été dédoublé dans un plan supérieur et un plan inférieur au corps du robot (ces plans sont parallèles au plan Oxy), ce qui évite toute collision avec le bloc-motorisation.

Chaque bras 5 est monté sur un pivot 6 et comporte un levier arrière 7, solidaire du bras par l'intermédiaire d'un renfort 8. Trois trous de goupille 9 permettent trois positions différentes d'assemblage du renfort 8 sur le bras, ce qui permet de régler l'angle caractéristique α du bras et de s'adapter ainsi à différents diamètres de poteaux.

Les bras 5 sont maintenus serrés autour du poteau par l'intermédiaire de bielles 10, fixées d'une part sur le levier arrière 7 de chaque bras 5 et d'autre part sur le chariot 11 qui coulisse le long du tube de guidage 12. Seize ressorts de traction à grande élongation (non représentés sur la figure) tendent à faire reculer le chariot 11 vers l'arrière du robot et donc à serrer les bras 5 autour du poteau. Ces ressorts sont fixés d'une part sur un support avant mobile 13 solidaire du chariot 11 et d'autre part sur un support arrière fixe 14 lié au bâti 1 par l'intermédiaire du tube 12.

Selon une variante de réalisation, on peut remplacer les ressorts de traction par des ressorts de compression fixés d'une part au chariot coulissant 11 et d'autre part au bâti près de la tourelle, et qui ont aussi pour fonction de soumettre le chariot à une force tendant à faire reculer le chariot 11 vers l'arrière. Ces ressorts peuvent être remplacés par tout autre moyen équivalent.

L'arrière du bâti 1 supporte un moteur électrique 15 qui est actionné par le biais d'un automate programmable 16 et d'un bloc de commande 17 comportant une carte de puissance et des batteries. Le moteur et les batteries sont des composants pesants positionnés intentionnellement loin de l'axe Oz du poteau afin d'écarter le centre de gravité G et garantir ainsi la bonne fixation du robot par arc-boutement. Le moteur actionne par l'intermédiaire d'un système de crabotage 18, soit un réducteur à engrenage 19 qui entraîne le galet propulseur 2, soit un second réducteur à engrenages 20 qui entraîne la couronne dentée 21 solidaire de la tourelle orientable 3. Les fonctions de propulsion et d'orientation du galet sont donc obtenues avec un seul moteur et un crabot. On peut aussi imaginer de supprimer le crabot 18 et de rajouter un second moteur dévolu exclusivement à l'orientation du galet 2 comme indiqué précédemment.

Un tel robot grimpeur a été réalisé. Il a les principales caractéristiques suivantes.

La masse totale est inférieure à 8 kg et les dimensions repliées restent dans le gabarit suivant : 50 cm x 50 cm x 50 cm.

Il permet l'emport d'une charge utile de 1 kilogramme, dans un espace d'emport dédié constitué d'un cube de 10 cm x 10 cm x 10 cm.

La vitesse maximale en montée et descente est d'au moins 50 m m/s.

Les structures verticales exploitables sont des éléments de type tronconique, d'un diamètre compris entre 30 cm et 10 cm. Le fonctionnement sur des structures octogonales est possible.

Il est capable de franchir des cerclages ceinturant le poteau et générant une surépaisseur de 5 mm à sa surface.

## Revendications

1.  Robot grimpeur mobile le long d'un poteau (50) présentant un axe vertical Oz, qui comprend un bâti (1) équipé de moyens motorisés de déplacement le long du poteau et d'un module (16, 17) de contrôle-commande de ces moyens de déplacement, les moyens motorisés de déplacement comportant au moins deux appuis roulants (2, 4) destinés à être en contact avec le poteau, dont au moins un appui roulant motorisé (2) désigné appui propulseur, cet appui ayant un contact frottant avec le poteau, **caractérisé en ce qu'**il comporte des moyens d'arc-boutement comprenant lesdits appuis roulants, dont le centre de gravité G est éloigné de l'axe Oz du poteau (50), et **en ce que** l'éloignement de G, le coefficient de frottement de l'appui propulseur et l'inclinaison du robot par rapport à l'axe Oz sont liés entre eux de manière à assurer le maintien du robot en position fixe sans consommation d'énergie.

2.  Robot grimpeur selon la revendication précédente, **caractérisé en ce que** l'appui propulseur (2) comprend un galet.

3.  Robot grimpeur selon l'une des revendications précédentes, **caractérisé en ce que** l' (ou les) appui(s) roulant(s) motorisés (2) est (sont) l' (les) appui(s) roulant(s) le(s) plus proche(s) du centre de gravité G.

4.  Robot grimpeur selon l'une des revendications précédentes, **caractérisé en ce que** les appuis roulants sont situés dans un plan de symétrie S du robot passant par l'axe Oz du poteau (50) et le centre de gravité G et/ou symétriquement répartis par rapport à ce plan de symétrie S.

5. Robot grimpeur selon l'une des revendications précédentes, **caractérisé en ce que** les moyens d'arc-boutement comportent une tourelle orientable (3) selon un axe sensiblement normal au poteau (50), sur laquelle est monté un appui propulseur (2).

6. Robot grimpeur selon l'une des revendications précédentes, **caractérisé en ce que** les moyens d'arc-boutement comportent au moins un appui roulant non motorisé (4) aussi désigné appui passif.

7. Robot grimpeur selon la revendication précédente, **caractérisé en ce que** l'appui passif (4) est une rotule sphérique.

8. Robot grimpeur selon l'une des revendications précédentes, prise en combinaison avec les revendications 2 ou 7, **caractérisé en ce que** le galet et/ou la rotule sphérique présente un volume apte à s'inscrire entre un plan T tangentiel au poteau (50) et un plan P parallèle à T et passant par l'axe Oz du poteau.

9. Robot grimpeur selon l'une des revendications précédentes, **caractérisé en ce que** les moyens d'arc-boutement comportent pour au moins un appui, un mécanisme de serrage destiné à maintenir l'appui serré sur le poteau (50).

10. Robot grimpeur selon la revendication précédente, **caractérisé en ce que** le mécanisme de serrage comprend au moins un ressort et pour chaque appui apte à être serré, un bras mobile (5) qui supporte ledit appui (4) et est relié au ressort.

11. Robot grimpeur selon la revendication précédente, **caractérisé en ce que** le bras mobile (5) est actionné par un mécanisme à bielle (10), un chariot coulissant (11) et un support avant mobile (13).

12. Robot grimpeur selon l'une des revendications 10 à 11, **caractérisé en ce que** le bras (5) comporte un segment en contact avec le poteau et **en ce que** la force de serrage appliquée par le bras (5) est quasiment perpendiculaire au dit segment dans toutes les positions de serrage.

13. Robot grimpeur selon l'une des revendications précédentes, **caractérisé en ce que** les moyens motorisés de déplacement comportent un moteur (15), un appui propulseur (2), une tourelle orientable (3) et un crabot (18) relié d'une part au moteur et d'autre part à l'appui propulseur ou à la tourelle orientable.

14. Robot grimpeur selon l'une des revendications 1 à 12, **caractérisé en ce que** les moyens motorisés de déplacement comportent un appui propulseur (2), une tourelle orientable (3), un premier moteur relié à l'appui propulseur (2), et un deuxième moteur relié à la tourelle orientable (3).

15. Robot grimpeur selon l'une des revendications précédentes prises en combinaison avec la revendication 4, **caractérisé en ce qu'**il comprend trois appuis roulants dont un appui propulseur (2) situé dans le plan de symétrie S et deux appuis passifs (4), les trois appuis étant destinés à être sensiblement répartis à 120° autour du poteau (50).

**Claims**

1. A climbing robot for moving along a post (50) having a vertical axis Oz, comprising a frame (1) provided with motorised means for moving along the post and with a module (16, 17) for controlling said movement means, said motorised movement means comprising at least two roller supports (2, 4) that are designed to be in contact with the post, at least one of which being a motorised roller support (2), referred to as driven support, said support having friction contact with the post, **characterised in that** it comprises bracing-suspension means, comprising said roller supports, with a centre of gravity G that is located at a distance from the axis Oz of the post (50), and **in that** the distance from G, the friction coefficient of the driven support and the incline of the robot relative to the axis Oz are inter-linked so as to keep the robot in a fixed position without consuming energy.

2. The climbing robot according to the preceding claim, **characterised in that** the driven support (2) comprises a roller.

3. The climbing robot according to any one of the preceding claims, **characterised in that** the one (or more) motorised driven support(s) (2) is/are the roller supports that are closest to the centre of gravity G.

4. The climbing robot according to any one of the preceding claims, **characterised in that** the roller supports are located in a plane of symmetry S of the robot that passes through the axis Oz of the post (50) and the centre of gravity G and/or are symmetrically distributed relative to said plane of symmetry S.

5. The climbing robot according to any one of the preceding claims, **characterised in that** the bracing-suspension means comprise a revolving head (3) that can be oriented along an axis that is substantially perpendicular to the post (50), on which a driven support (2) is mounted.

6. The climbing robot according to any one of the preceding claims, **characterised in that** the bracing-suspension means comprise at least one non-motorised roller support (4), also referred to as passive support.

7. The climbing robot according to the preceding claim, **characterised in that** the passive support (4) is a ball joint.

8. The climbing robot according to any one of the preceding claims, in combination with claim 2 or 7, **characterised in that** the volume of the roller and/or the ball joint is such that they can be included between a plane T that is tangential to the post (50) and a plane P that is parallel to T and passes through the axis Oz of the post.

9. The climbing robot according to any one of the preceding claims, **characterised in that** the bracing-suspension means comprise, for at least one support, a clamping mechanism that is designed to keep the support clamped against the post (50).

10. The climbing robot according to the preceding claim, **characterised in that** the clamping mechanism comprises at least one spring and, for each support that is designed to be clamped, a mobile arm (5) that supports said support (4) and is linked to the spring.

11. The climbing robot according to the preceding claim, **characterised in that** the mobile arm (5) is activated by a linkage mechanism (10), a sliding carriage (11) and a moveable front beam (13).

12. The climbing robot according to any one of claims 10 to 1l, **characterised in that** the arm (5) comprises a segment that is in contact with the post and **in that** the clamping force that is applied to the arm (5) is quasi-perpendicular to said segment in all of the clamping positions.

13. The climbing robot according to any one of the preceding claims, **characterised in that** the motorised movement means comprises a motor (15), a driven support (2), an orientable revolving head (3) and a dog coupling (18) connected on the one hand to the motor and on the other hand to the driven support or to the orientable revolving head.

14. The climbing robot according to any one of claims 1 to 12, **characterised in that** the motorised movement means comprises a driven support (2), an orientable revolving head (3), a first motor connected to the driven support (2), and a second motor connected to the orientable revolving head (3).

15. The climbing robot according to any one of the preceding claims in combination with claim 4, **characterised in that** it comprises three roller supports including one driven support (2) that is located in the plane of symmetry S and two passive supports (4), the three supports being designed to be substantially distributed at 120° intervals around the post (50).

**Patentansprüche**

1. Besteigungsroboter für eine Bewegung entlang einem Mast (50) mit einer vertikalen Achse Oz, der ein Gehäuse (1) mit Motorantriebsbewegungsmitteln für eine Bewegung entlang dem Mast und einem Modul (16, 17) zum Steuern dieser Bewegungsmittel umfasst, wobei die Motorantriebsbewegungsmittel wenigstens zwei rollende Abstützungen (2, 4) zum kontaktieren des Mastes umfassen, wobei wenigstens eine davon eine motorgetriebene rollende Abstützung (2), als Antriebsabstützung bezeichnet, ist, wobei diese Abstützung in Reibungskontakt mit dem Mast ist, **dadurch gekennzeichnet, dass** er Blockiermittel umfasst, welche die rollenden Abstützungen umfassen, deren Schwerpunkt G von der Achse Oz des Mastes (50) beabstandet ist und, dass der Abstand von G, der Reibungskoeffizient der Antriebsabstützung und die Neigung des Roboters in Bezug auf die Achse Oz so untereinander verbunden sind, dass gewährleistet wird, dass der Roboter ohne Energieverbrauch in einer festen Position gehalten wird.

**2.** Besteigungsroboter nach dem vorherigen Anspruch, **dadurch gekennzeichnet, dass** die Antriebsabstützung (2) eine Rolle umfasst.

**3.** Besteigungsroboter nach einem der vorherigen Ansprüche, **dadurch gekennzeichnet, dass** die motorgetriebene(n) rollende(n) Abstützung(en) (2) die dem Schwerpunkt G am nächsten liegende(n) rollende(n) Abstützung(en) ist/sind.

**4.** Besteigungsroboter nach einem der vorherigen Ansprüche, **dadurch gekennzeichnet, dass** sich die rollenden Abstützungen in einer durch die Achse Oz des Mastes (50) und den Schwerpunkt G verlaufende Symmetrieebene S des Roboters befinden und/oder symmetrisch in Bezug auf diese Symmetrieebene S verteilt sind.

**5.** Besteigungsroboter nach einem der vorherigen Ansprüche, **dadurch gekennzeichnet, dass** die Blockiermittel einen Revolverkopf (3) umfassen, der gemäß einer Achse im Wesentlichen normal zum Mast (50) ausgerichtet werden kann und an dem eine Antriebsabstützung (2) montiert ist.

**6.** Besteigungsroboter nach einem der vorherigen Ansprüche, **dadurch gekennzeichnet, dass** die Blockiermittel wenigstens eine nicht motorgetriebene rollende Abstützung (4) umfassen, die auch als passive Abstützung bezeichnet werden kann.

**7.** Besteigungsroboter nach dem vorherigen Anspruch, **dadurch gekennzeichnet, dass** die passive Abstützung (4) ein Kugelgelenk ist.

**8.** Besteigungsroboter nach einem der vorherigen Ansprüche in Kombination mit Anspruch 2 oder 7, **dadurch gekennzeichnet, dass** die Rolle und/oder das Kugelgelenk ein solches Volumen hat, dass sie/es zwischen eine Ebene T tangential zum Mast (50) und eine durch die Achse Oz des Mastens verlaufende Ebene P parallel zu T passt.

**9.** Besteigungsroboter nach einem der vorherigen Ansprüche, **dadurch gekennzeichnet, dass** die Blockiermittel für wenigstens eine Abstützung einen Klemmmechanismus umfassen, um die Abstützung an den Mast (50) geklemmt zu halten.

**10.** Besteigungsroboter nach dem vorherigen Anspruch, **dadurch gekennzeichnet, dass** der Klemmmechanismus wenigstens eine Feder und für jede festzuklemmende Abstützung einen beweglichen Arm (5) umfasst, der die Abstützung (4) trägt und mit der Feder verbunden ist.

**11.** Besteigungsroboter nach dem vorherigen Anspruch, **dadurch gekennzeichnet, dass** der bewegliche Arm (5) durch einen Gestängemechanismus (10), einen Gleitschlitten (11) und einen beweglichen vorderen Träger (13) betätigt wird.

**12.** Besteigungsroboter nach einem der Ansprüche 10 bis 11, **dadurch gekennzeichnet, dass** der Arm (5) ein Segment in Kontakt mit dem Mast umfasst, und dadurch, dass die durch den Arm (5) aufgebrachte Klemmkraft in allen Klemmpositionen quasi lotrecht zu dem Segment ist.

**13.** Besteigungsroboter nach einem der vorherigen Ansprüche, **dadurch gekennzeichnet, dass** die motorgetriebenen Bewegungsmittel einen Motor (15), eine Antriebsabstützung (2), einen ausrichtbaren Revolverkopf (3) und eine Klauenkupplung (18) umfassen, die einerseits mit dem Motor und andererseits mit der Antriebsabstützung oder dem ausrichtbaren Revolverkopf verbunden ist.

**14.** Besteigungsroboter nach einem der Ansprüche 1 bis 12, **dadurch gekennzeichnet, dass** die motorgetriebenen Bewegungsmittel eine Antriebsabstützung (2), einen ausrichtbaren Revolverkopf (3), einen mit der Antriebsabstützung (2) verbundenen ersten Motor und einen mit dem ausrichtbaren Revolverkopf (3) verbundenen zweiten Motor umfassen.

**15.** Besteigungsroboter nach einem der vorherigen Ansprüche in Kombination mit Anspruch 4, **dadurch gekennzeichnet, dass** er drei rollende Abstützungen, d.h. eine in der Symmetrieebene (2) befindliche Antriebsabstützung (2) und zwei passive Abstützungen (4) aufweist, wobei die drei Abstützungen so ausgelegt sind, dass sie im Wesentlichen mit 120° um den Mast (50) herum verteilt sind.

FIG.1

FIG.1bis

FIG.2a

FIG.2b

FIG.3

**FIG.4a**

**FIG.4b**

**FIG.5**

**FIG.6a**

**FIG.6b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 005551525 A
- US 003811320 A
- US 5213172 A
- US 005542496 A
- US 20030188416 A
- US 2581479 A

- US 2477922 A
- US 2482392 A
- US 3460649 A
- US 4331216 A
- US 3960240 A
- US 3955645 A